# EUROPEAN PATENT SPECIFICATION

(11) **EP 4 532 173 B1**
(45) Date of publication and mention of the grant of the patent: **01.07.2026**
(21) Application number: 23728742.0
(22) Date of filing: 25.05.2023
(51) Int. Cl.: B29C 51/26, B29C 51/14, B29K 105/04, B29L 31/08, B29L 31/52, B29L 31/00, B29C 51/00, B29K 33/00, B29K 79/00

(54) **PROCESS FOR PRODUCING MULTIDIMENSIONAL RIGID FOAM PARTS BY MEANS OF JIGSAW PUZZLE-PIECE CONNECTION**
VERFAHREN ZUR HERSTELLUNG MEHRDIMENSIONALER HARTSCHAUMSTOFFTEILE MITTELS PUZZLETEILVERBINDUNG
PROCÉDÉ DE FABRICATION DE PIÈCES MULTIDIMENSIONNELLES EN MOUSSE DURE AU MOYEN D'UNE LIAISON PAR EMBOITEMENT

(30) Priority: 03.06.2022 EP 22177203
(43) Date of publication of application: 09.04.2025
(73) Proprietor: Evonik Operations GmbH, 45128 Essen (DE)
(72) Inventor: GOLDMANN, Felix, 64347 Griesheim (DE); ROTH, Matthias Alexander, 64347 Griesheim (DE); RICHTER, Thomas, 64287 Darmstadt (DE); SÜNDERMANN, Jörn Daniel, 64289 Darmstadt (DE); KÖRBER, Heinz, 64385 Reichelsheim (DE); MELNIK, Paul, 67551 Worms (DE)
(74) Representative: Evonik Patent Association
(86) International application number: PCT/EP2023/064003
(87) International publication number: WO 2023/232614

(56) References cited:
- EP-A1- 3 978 215
- FR-A1- 2 804 899
- US-A1- 2015 022 423
- US-A1- 2015 064 391

## Description

### Field of the invention

The invention relates to a process for producing multidimensional rigid foam parts. Related prior art is described in patent literature FR2804899A1, US2015/022423A1, US2015/064391A1, and EP3978215A1.

### Prior art

Rigid foams such as polymethacrylimide, which is sold under the product name Rohacell^{®}, are used, inter alia, as a core material for sandwich structures with cover layers composed of fibre composites. They are often made into the desired core geometry by milling. The size of the finished core is limited here by the size of the starting panel which typically does not exceed a length of 2.50 m. If larger core structures are to be produced, the connecting surface between the core segments is configured as a butt joint. This means that the exact positionability of the segments in relation to each other cannot be guaranteed. In addition, slippage of the segments relative to each other and to the mould or the cover layers already applied is possible. An air gap can also form between the segments. This may constitute a mechanical weak point of the finished component due to the occurrence of local stress points. In addition, the gap may fill with resin during the curing process of the cover layers, which may result in sink marks on the surface of the component due to excessive shrinkage, local thermal damage due to exothermic curing processes, and an impaired dielectric performance of the component (such as in antenna covers which show increased absorption at this point).

If a core having complex geometry, such as for example sharp curvature or large variations in thickness, is to be inserted into a mould as a whole mechanically solid connected part, it must be milled from the solid or be produced by a thermal forming process. Milling of the solid generates very high wastage and is therefore often uneconomic. If the core prior to milling is divided into individual segments by butt joints, the economic viability increases. However, the aforementioned disadvantages of the butt joint connection arise.

Jigsaw puzzle-piece connections in cardboard and flexible foam structures are obtained by diecutting. This process is only of very limited suitability for rigid foams because the achievable tolerances of the connection are not sufficiently small.

Milling is not used as a production process for jigsaw puzzle-piece connections in flexible foams because the foam cannot be processed sufficiently precisely when milling. In addition, the temperature resistance of many common flexible foams is so low that the frictional heat that occurs during milling leads to further softening of the foam such that cuttings of the mill are added. Cooling by a coolant and lubricant is inadvisable owing to the porous structure of the foam since they cannot be readily removed from the cells again.

DE102012024167 describes detachable connections of interlocking panels of a faceted arrangement. DE102012024167 discloses a process for producing complex rigid foam parts by milling, in which the complex component is divided into individual parts and the individual parts are milled to a jigsaw puzzle-piece shape. To achieve a dome, for example, the panels overlap twodimensionally over their entire side length and form an interlock locally at least twice per connection. Within an interlock, the panels are linearly butted on the one hand directly and - protected from slipping of the edges from each other - butt-jointed and on the other hand at clearly either fixed or movable protrusions arranged in the same position in cross-section but offset from each other in the top view of the larger planar arrangement (outer side) as edge sections hooked into each other instead of penetrating each other with opposing tabs. As bulges on the panel edge, fixed edge sections remain between or next to the flaps that can be rotated in a fold, against which the neighbouring panel can nestle with its movable flap.

The panel material used is tough because for each tab a "living hinge" is formed as a line joint in a remaining cover layer after the other cover layer and largely also the lightweight core of the lightweight material has been cut along a fold line.

### Problem

Against the background of the prior art discussed, it was therefore an object of the present invention to provide a process for joining large-volume multidimensional rigid foam parts which prevents slippage of the component segments in relation to each other and also enables the joined rigid foam part to be handled in a manner comparable to a one-piece rigid foam part.

Other problems not explicitly discussed here can be derived from the prior art, the description or the claims.

### Solution

The object is achieved by a process for producing multidimensional rigid foam parts based on polymers having a glass transition temperature T_{g} of at least 100°C, measured in accordance with DIN EN ISO 11357-2 (issue date: 2020-08) by milling, characterized in that
- the planar component segments are shaped multidimensionally by thermoforming,
- the multidimensionally shaped component segments are milled into jigsaw puzzle-piece shapes,
- the multidimensional component segments are assembled to give a multidimensional rigid foam part.

Surprisingly, it has been found that large volume rigid foam parts, assembled from jigsaw puzzle piece-shaped component segments, result in very stable constructions. The splitting of a multidimensional rigid foam part into several jigsaw puzzle piece-shaped component segments enables complicated constructions to be achieved.

It has been found that the use of jigsaw puzzle piece-shaped component segments results in considerable savings of material and therefore savings in cost and resources.

Multidimensional rigid foam parts are components comprising two or more dimensions.

It has been found in particular that also 2- or 3-dimensional curved rigid foam parts can be produced.

Compared to the 2-dimensional flat components known from the prior art, such as EP 2380747, which are always constant over one dimension, for example the height, the multidimensional rigid foam parts according to the invention have a variable expansion in all 3 dimensions, in particular also the height, in the individual component segment and also between the component segments. In contrast to the known geodesic or meta-geodesic structures, the rigid foam parts according to the invention are used to assemble continuously curved structures in a simple manner.

A geodesic dome is a convex irregular polyhedron. Euler's polyhedron theorem applies to geodesic domes: number of corners + number of faces - number of edges = 2

Usually, dodecahedra or icosahedra are geometrically transformed for geodesic domes, which are defined by pentagons or triangles, respectively. However, it is also possible to convert all Platonic solids or even any polyhedron geometry into geodesic structures by corresponding subdivision into triangles. A geodesic semi-dome consists of triangles joined together to form pentagons and hexagons, resulting in different angles or side lengths for the triangles.

In addition, multidimensional components can be characterized by the fact that the component does not form a continuous surface but has significant openings. Particular fields of application are the production of support structures resembling a rod arrangement, which until now have consisted of individual rods, that are freely positioned on a carrier surface, in particular a carrier film, and only receive a stable connection via adhesion. In this context, rod arrangement refers to a spatial supporting structure consisting of two or more slender rods connected to each other. The butt joint of the rods is made by gluing with resins, which are also used for binding to the carrier surface or carrier foil.

Firstly, the rods are glued together to prevent slipping. Secondly, the rods are fixed to the carrier surface.

Rigid foams are preferably used for the process according to the invention.

The rigid foam panels used according to the invention are produced from polymers having a glass transition temperature T_{g} of at least 100°C, preferably at least 140°C, measured according to DIN EN ISO 11357-2 (issue date: 2020-08). The standard DIN EN ISO 11357-2 for plastics describes differential scanning calorimetry (DSC) - Part 2: Determination of glass transition temperature and glass transition activation energy.

The polymers are selected from the group consisting of polyethersulfone, polyphenylsulfone, polyether ether ketone (PEEK), polysulfone, polyurethane (PU), polyethylene therephthalate (PET), preferably poly(meth)acrylimide (P(M)I), polymethyl (meth)acrylate, poly(ether)imide (P(E)I), and mixtures, and also copolymers of the aforementioned.

The term poly(meth)acrylimide (P(M)I) is hereinbelow to be understood as meaning polymethacrylimides (PMI), polyacrylimides (PI) or mixtures thereof. Similar applies for example to polymethyl (meth)acrylate. Accordingly the term polymethyl (meth)acrylate is to be understood as meaning not only polymethyl methacrylate (PMMA) but also polymethyl acrylate and mixtures of both of these.

The material for the multidimensional rigid foam part is preferably P(M)I, particularly preferably PMI. Such P(M)I foams are also referred to as rigid foams and exhibit particular strength.

The production of P(M)I foams is described for example in EP 3221101. The P(M)I foams are normally produced in a two-stage process: a) production of a cast polymer and b) foaming of this cast polymer.

The cast polymer is produced by first producing monomer mixtures which comprise, as main constituents, (meth)acrylic acid and (meth)acrylonitrile, preferably in a molar ratio of from 2:3 to 3:2. In addition, it is possible to use further comonomers such as esters of acrylic or methacrylic acid, styrene, maleic acid or itaconic acid or anhydrides thereof or vinylpyrrolidone. However, the proportion of the comonomers should be not more than 30% by weight. It is also possible to use small quantities of crosslinking monomers, e.g. allyl acrylate. However, the amounts should preferably be at most 0.05 to 2.0% by weight.

The mixture for the copolymerization further contains blowing agents which undergo either decomposition or evaporation to form a gas phase at temperatures of about 150°C to 250°C. The polymerization occurs below this temperature, so that the cast polymer contains a latent blowing agent. The polymerization advantageously takes place in block form between two glass plates. For the production of foamed sheets, this is then followed according to the prior art by the foaming of the cast polymer in a second step at an appropriate temperature. The production of these P(M)I foams is known in principle to the person skilled in the art and can be found by way of example in EP 1 444 293, EP 1 678 244 or WO 2011/138060. Examples of PMI foams include in particular the ROHACELL^{®} line from Evonik Industries AG, Germany. Acrylimide foams can be considered as analogous to the PMI foams in respect of production and processing. However, for toxicological reasons, these are substantially less preferred compared to other foam materials.

The density of the rigid foam material can be selected relatively freely. P(M)I foams may be employed in a density range of for example 20 to 320 kg/m³, preferably of 25 to 250 kg/m³. It is particularly preferable to employ a PMI foam having a density between 30 and 200 kg/m³. Measured according to DIN EN ISO 845 (issue date: 2009-10).

The rigid foams described here are produced in foam blocks. These foam blocks have different thicknesses according to the polymers used and the achieved density. The foam block thicknesses are preferably in the range of 50 mm to 200 mm, particularly preferably between 55 mm to 165 mm. Preferably, foam panels are first cut from the foam blocks. These foam panels have thicknesses between 5 mm and 150 mm, particularly preferably between 10 mm and 90 mm.

Various methods for cutting rigid foam blocks and panels are known. Cutting is preferably effected using a laser, band knife or band saw.

The planar component segments thus obtained are subjected to thermoforming before being milled into a jigsaw puzzle-piece shape. In principle, 2 processes are available for this purpose.

The first thermoforming process for planar component segments comprises the following steps:
- inserting the planar component segment into a shaping mould
- heating the shaping mould in an air circulation oven to temperatures between 180 and 230°C
- removing the multidimensionally shaped component segment from the shaping mould.

The second thermoforming process for planar component segments comprises the following steps:
- heating the planar component segments in an oven, a hot-press or with infrared radiation to 180 to 230°C
- inserting the heated planar component segment into a shaping mould
- closing the shaping mould and shaping the component segment using pressure or vacuum
- removing the multidimensional component segment from the shaping mould.

In these thermoforming processes, cooling of the planar component segment between the heating step and the insertion into the shaping mould must be prevented or minimized. For this purpose, the planar component segment can be enveloped with a material selected from the group of nonwovens, fabrics or films prior to thermoforming.

One-piece and two-piece shaping moulds are known to those skilled in the art as shaping moulds. Depending on the type of mould, pressure or vacuum is applied for the shaping step.

After cooling the multidimensionally formed component segment, it can be fed into the milling process in jigsaw puzzle-piece form.

Particularly preferred when processing rigid foam blocks into component segments in jigsaw puzzle-piece form is milling using CNC machines.

When milling the jigsaw puzzle-piece connection, a press fitting can be provided which enables a secure connection of the individual component segments. In addition, this prevents an air gap and therefore penetration of resin therein in the case of subsequent processing by joining.

An alternative embodiment is the clearance fit. In this case, a defined minimum gap between the jigsaw puzzle-piece connection is milled. The penetration of the resin as binder into the gaps of the joints leads to a stable bonding of the component segments to each other and simultaneously to the carrier surfaces or cover layers.

The shape of the jigsaw puzzle pieces is highly variable. Preferably, the interlocking part of the jigsaw puzzle-piece stone is realised as a mortise and tenon joint. Preference is given to using round tenon and mortise shapes. In order to realise a displacement-free form fit, the tenon is milled in the form of a stem with a semicircular head (lollipop shape) and the corresponding counterpart as a mortise. This mortise and tenon joint leads to particularly displacement-free connections for both multidimensionally shaped and planar components. The form fit obtained is particularly preferred for large-volume components.

It has been found that this process can prevent notches and thickness variations between component segments. A wide variety of geometries with smooth surfaces can be achieved.

It has been found that cutting the rigid foam part into jigsaw puzzle-piece shape has several advantages compared to joining together straight cuts. The jigsaw puzzle-piece connection is a much more stable connection since it is very torsion resistant and an adhesion point is not necessarily required since an interlocking connection is present.

A further object consists in the provision of large volume rigid foam parts.

This object was achieved by a process in which the component segments, prior to insertion in the mould, are joined by a jigsaw puzzle-piece connection.

Large volume means that the dimensions of the rigid foam part exceed the maximum available dimension of the starting material in at least one direction.

Common manufacturing processes can only provide rigid foam blocks with limited dimensions as starting material. In general, the maximum dimensions in rigid foam blocks are 250 x 125 x 15 cm. If, for example, aircraft wings (e.g. with a length of 5000 cm) or rotor blades are to be made therefrom, these large-volume rigid foam parts must be produced by juxtaposing two or more rigid foam blocks.

The jigsaw puzzle-piece connection ensures an interlocking connection of the individual component segments which enables easy handling during positioning in the mould. Slippage of the component segments relative to each other is prevented. In addition, homogeneous force transmission within the core is ensured during use in a finished sandwich structure.

It is possible to use rigid foam blocks of different thicknesses as a starting material for component segments having greatly different thicknesses in the finished core. Material utilization can thus be optimized.

In one variant, rigid foam blocks of different densities are combined so that locally varying stresses in the rigid foam part are taken into account.

The process according to the invention is also suitable for producing rigid foam parts which are suitable for producing sandwich components.

For this purpose, the rigid foam parts may be covered with at least one outer layer. The cover material may comprise wood, metals, decorative films, composite materials, prepregs, woven fabrics or other known materials.

This makes it possible to realize for example sandwich materials employed in lightweight construction. Alternatively, the outer layers may simply be merely a protective film that can be removed again or a decorative layer.

For example, a rigid foam part with thermoplastic or crosslinked cover layers may be present. The prior art discloses various processes for producing composite parts.

The rigid foam part is particularly preferably glued, stitched or welded to a cover material. "Welded" means here that heating the components gives rise to a cohesive connection (adhesion) between the rigid foam part and the cover materials.

The multidimensional rigid foam parts produced by the process according to the invention are used in the construction of spacecraft or aircraft, shipbuilding, rail vehicle construction or vehicle construction, especially in the interior or exterior thereof. This may include the multidimensional rigid foam parts, produced by processes according to the invention, and likewise the sandwich components realized therefrom. More particularly, by virtue of their low flammability, the rigid foam parts according to the invention can also be installed in the interior of said vehicles. In addition, the materials are used in wind energy technology, for example in wind turbines, especially in rotor blades.

Further possible applications are in the sport and leisure industry, such as sports equipment of large dimensions, for example, skies or surfboards, and in medical technology for medical technology components such as X-ray or CT couches.

Sandwich components with the multidimensional rigid foam parts produced according to the invention are in addition particularly suitable for incorporation in aircraft exteriors too. The "exterior" means not just as filling in the outer skin of an aircraft, but especially also in an aircraft nose, in the tail region, in the wings, in the outside doors, in the control surfaces or in rotor blades.

## Claims

1. Process for producing multidimensional rigid foam parts based on polymers having a glass transition temperature T_{g} of at least 100°C, measured in accordance with DIN EN ISO 11357-2 (issue date: 2020-08) by milling, **characterized in that**
- the planar component segments are shaped multidimensionally by thermoforming,
- the multidimensionally shaped component segments are milled into jigsaw puzzle-piece shapes,
- the multidimensional component segments are assembled to give a multidimensional rigid foam part.

2. Process for producing multidimensional rigid foam parts according to Claim 1, **characterized in that** the thermoforming of the planar component segments comprises the following steps of:
- inserting the planar component segment into a shaping mould
- heating the shaping mould in an air circulation oven to temperatures between 180 and 230°C
- removing the multidimensionally shaped component segment from the shaping mould.

3. Process for producing multidimensional rigid foam parts according to Claim 1, **characterized in that** the thermoforming of the planar component segments comprises the following steps of:
- heating the planar component segments in an oven, a hot-press or with infrared radiation to 180 to 230°C,
- inserting the heated planar component segment into a shaping mould,
- closing the shaping mould and shaping the component segment using pressure or vacuum,
- removing the multidimensional component segment from the shaping mould.

4. Process for producing multidimensional rigid foam parts according to Claim 3, **characterized in that** the planar component segment is enveloped with a material selected from the group of nonwovens, fabrics or films prior to thermoforming.

5. Process for producing multidimensional rigid foam parts according to Claim 1, **characterized in that** the mortice and tenon joints of the jigsaw puzzle-pieces are milled into a lollipop shape.

6. Process according to Claim 1, **characterized in that** the polymers are selected from the group of polymethacrylimide (PMI), polyetherimide (PEI) and polymethyl methacrylate (PMMA).

7. Process according to Claim 1, **characterized in that** particularly large volume rigid foam parts are produced via jigsaw puzzle-piece connections.

8. Process according to Claim 1, **characterized in that** 2- or 3-dimensional curved rigid foam parts are produced.

9. Process according to Claim 1, **characterized in that** the rigid foam parts are produced for sandwich components.

10. Use of rigid foam parts produced according to Claim 1 in the manufacture of goods for the aerospace industry, shipbuilding, wind energy, the sports and leisure industry, preferably sports equipment with large dimensions, such as skis or surfboards, vehicle construction, especially in electromobility, and medical technology.

## Patentansprüche

1. Verfahren zur Herstellung mehrdimensionaler Hartschaumteile auf der Basis von Polymeren mit einer Glasübergangstemperatur T_{g} von wenigstens 100 °C, gemessen nach DIN EN ISO 11357-2 (Ausgabedatum: 2020-08), durch Fräsen, **dadurch gekennzeichnet, dass**
- die planaren Komponentensegmente durch Thermoformen mehrdimensional geformt werden,
- die mehrdimensional geformten Komponentensegmente zu Puzzleteilformen gefräst werden,
- die mehrdimensionalen Komponentensegmente zusammengesetzt werden, um ein mehrdimensionales Hartschaumteil zu ergeben.

2. Verfahren zur Herstellung von mehrdimensionalen Hartschaumteilen nach Anspruch 1,
**dadurch gekennzeichnet, dass** das Thermoformen der planaren Komponentensegmente die folgenden Schritte umfasst:
- Einführen des planaren Komponentensegments in eine Formgebungsform
- Erhitzen der Formgebungsform in einem Umluftofen auf Temperaturen zwischen 180 und 230 °C
- Entnehmen des mehrdimensional geformten Komponentensegments aus der Formgebungsform.

3. Verfahren zur Herstellung von mehrdimensionalen Hartschaumteilen nach Anspruch 1,
**dadurch gekennzeichnet, dass** das Thermoformen der planaren Komponentensegmente die folgenden Schritte umfasst:
- Erhitzen der planaren Komponentensegmente in einem Ofen, einer Heisspresse oder mit Infrarotstrahlung auf 180 bis 230 °C,
- Einführen des erhitzten planaren Komponentensegments in eine Formgebungsform,
- Schließen der Formgebungsform und Formen des Komponentensegments mit Druck oder Vakuum,
- Entnehmen des mehrdimensionalen Komponentensegments aus der Formgebungsform.

4. Verfahren zur Herstellung von mehrdimensionalen Hartschaumteilen nach Anspruch 3,
**dadurch gekennzeichnet, dass** das planare Komponentensegment vor Thermoformen mit einem Material ausgewählt aus der Gruppe von Vliesen, Geweben und Folien umhüllt wird.

5. Verfahren zur Herstellung von mehrdimensionalen Hartschaumteilen nach Anspruch 1,
**dadurch gekennzeichnet, dass** die Nut- und Zapfenverbindungen der Puzzleteile zu einer Lutscherform gefräst werden.

6. Verfahren nach Anspruch 1, **dadurch gekennzeichnet, dass** die Polymere ausgewählt sind aus der Gruppe von Polymethacrylimid (PMI), Polyetherimid (PEI) und Polymethylmethacrylat (PMMA).

7. Verfahren nach Anspruch 1, **dadurch gekennzeichnet, dass** besonders großvolumige Hartschaumteile über Puzzleteilverbindungen hergestellt werden.

8. Verfahren nach Anspruch 1, **dadurch gekennzeichnet, dass** 2- oder 3-dimensional gekrümmte Hartschaumteile hergestellt werden.

9. Verfahren nach Anspruch 1, **dadurch gekennzeichnet, dass** die Hartschaumteile für Sandwichkomponenten hergestellt werden.

10. Verwendung von nach Anspruch 1 hergestellten Hartschaumteilen bei der Herstellung von Gütern für die Luft- und Raumfahrtindustrie, den Schiffbau, die Windenergie, die Sport- und Freizeitindustrie, vorzugsweise Sportgeräte mit großen Abmessungen, wie z. B. Skier oder Surfbretter, den Fahrzeugbau, insbesondere für Elektromobilität, und die Medizintechnik.

## Revendications

1. Procédé pour la production par fraisage de pièces multidimensionnelles en mousse rigide à base de polymères ayant une température de transition vitreuse T_{g}, mesurée conformément à la norme DIN EN ISO 11357-2 (date de publication : 08/2020) d'au moins 100 °C, **caractérisé en ce que**
- les segments d'éléments plans sont mis en forme de manière multidimensionnelle par thermoformage,
- les segments d'éléments mis en forme de manière multidimensionnelle sont fraisés en formes de pièces de puzzle,
- les segments d'éléments multidimensionnels sont assemblés pour donner une pièce multidimensionnelle en mousse rigide.

2. Procédé pour la production de pièces multidimensionnelles en mousse rigide selon la revendication 1,
**caractérisé en ce que** le thermoformage des segments d'éléments plans comprend les étapes suivantes consistant à :
- introduire le segment d'élément plan dans un moule de mise en forme
- chauffer le moule de mise en forme dans un four à circulation d'air à des températures comprises entre 180 et 230 °C
- retirer le segment d'élément mis en forme de manière multidimensionnelle du moule de mise en forme.

3. Procédé pour la production de pièces multidimensionnelles en mousse rigide selon la revendication 1,
**caractérisé en ce que** le thermoformage des segments d'éléments plans comprend les étapes suivantes consistant à :
- chauffer les segments d'éléments plans dans un four, une presse à chaud ou avec un rayonnement infrarouge à 180 à 230 °C,
- introduire le segment d'élément plan chauffé dans un moule de mise en forme,
- fermer le moule de mise en forme et mettre en forme le segment d'élément à l'aide de pression ou de vide,
- retirer le segment d'élément multidimensionnel du moule de mise en forme.

4. Procédé pour la production de pièces multidimensionnelles en mousse rigide selon la revendication 3,
**caractérisé en ce que** le segment d'élément plan est enveloppé d'un matériau choisi dans le groupe des nontissés, des tissus ou des films avant le thermoformage.

5. Procédé pour la production de pièces multidimensionnelles en mousse rigide selon la revendication 1,
**caractérisé en ce que** les liaisons à mortaise et tenon des pièces de puzzle sont fraisés en une forme de sucette.

6. Procédé selon la revendication 1, **caractérisé en ce que** les polymères sont choisis dans le groupe du polyméthacrylimide (PMI), du polyétherimide (PEI) et du poly(méthacrylate de méthyle) (PMMA).

7. Procédé selon la revendication 1, **caractérisé en ce que** des pièces en mousse rigide de volume particulièrement grand sont produites par le biais d'emboîtements de pièces en forme de pièces de puzzle.

8. Procédé selon la revendication 1, **caractérisé en ce que** des pièces en mousse rigide courbes en 2 ou 3 dimensions sont produites.

9. Procédé selon la revendication 1, **caractérisé en ce que** les pièces en mousse rigide sont produites pour des éléments en sandwich.

10. Utilisation de pièces en mousse rigide produites selon la revendication 1 dans la fabrication de biens destinés à l'industrie aérospatiale, la construction navale, l'énergie éolienne, l'industrie des sports et loisirs, de préférence du matériel de sport de grandes dimensions, tel que des skis ou des planches de surf, la construction de véhicules, en particulier en électromobilité, et la technologie médicale.
